# EUROPÄISCHE PATENTSCHRIFT

(11) **EP 3 370 950 B1**
(45) Veröffentlichungstag und Bekanntmachung des Hinweises auf die Patenterteilung: **06.10.2021**
(21) Anmeldenummer: 16751275.5
(22) Anmeldetag: 08.08.2016
(51) Int. Cl.: B29D 30/00, B29B 13/08, B29C 35/08

(54) **VORRICHTUNG UND VERFAHREN ZUR BEREITSTELLUNG VON ROHREIFEN MIT ZUMINDEST EINEM DURCH ELEKTRONENSTRAHLEN VORVERNETZTEN, ZUMINDEST EINE KAUTSCHUKMISCHUNG AUFWEISENDEN BAUTEIL**
APPARATUS AND PROCESS FOR PROVIDING GREEN TYRES HAVING AT LEAST ONE COMPONENT THAT IS PRECURED BY ELECTRON BEAMS AND COMPRISES AT LEAST ONE RUBBER COMPOUND
DISPOSITIF ET PROCÉDÉ POUR LA MISE À DISPOSITION DE PNEUS NON VULCANISÉS AYANT AU MOINS UN COMPOSANT COMPORTANT AU MOINS UN MÉLANGE DE CAOUTCHOUC, PRÉ-RÉTICULÉ PAR FAISCEAUX ÉLECTRONIQUES

(30) Priorität: 03.11.2015 DE 102015221511
(43) Veröffentlichungstag der Anmeldung: 12.09.2018
(73) Patentinhaber: Continental Reifen Deutschland GmbH, 30165 Hannover (DE)
(72) Erfinder: SCHRAMM, Oliver, 31177 Harsum (DE); SOETBEER, Inga, 29221 Celle (DE)
(74) Vertreter: Continental Corporation
(86) Internationale Anmeldenummer: PCT/EP2016/068831
(87) Internationale Veröffentlichungsnummer: WO 2017/076528

(56) Entgegenhaltungen:
- EP-A2- 1 818 164
- WO-A1-2008/007398
- DE-A1- 2 622 040
- JP-A- H 071 471
- US-A- 5 631 028
- US-A1- 2004 069 391

## Beschreibung

Die Erfindung betrifft eine Vorrichtung und ein Verfahren zur Bereitstellung von Rohreifen mit zumindest einem durch Elektronenstrahlen vorvernetzten, zumindest eine Kautschukmischung aufweisenden Bauteil.

Bei der Reifenherstellung ist es üblich, aus Kautschukmischungen gefertigte Reifenbauteile mittels Elektronenstrahlen oberflächlich vorzuvernetzen. Die Elektronenstrahlquelle wird üblicherweise direkt an dem die jeweilige Kautschukmischung extrudierenden Rollerhead-Extruder angeordnet, sodass die Vorvernetzung unmittelbar nach der Extrusion erfolgt. Die vorvernetzten Reifenbauteile weisen gegenüber den aus "rohen" Kautschukmischungen gefertigten Reifenbauteilen eine reduzierte Fließfähigkeit auf, sodass beispielweise ein Durchdringen von Bauteilen durch gespannte Korde oder ein Kriechen der Kautschukmischung in die Entlüftungsventile bzw. Entlüftungsbohrungen der Reifenheizform und das damit verbundene "Anhaften" der Reifenbauteile bei der Vulkanisation in der Reifenheizform im Wesentlichen vermieden werden. Bei letzterem kann ein aufwendiges Reinigen der Entlüftungsventile weitgehend entfallen. Des Öfteren können die Entlüftungsventile nicht mehr von den Gummiresten befreit werden, sodass einzelne Entlüftungsventile getauscht werden müssen und entsprechende Stillstandzeiten und Kosten anfallen. Ferner ermöglicht die Vorvernetzung den Einsatz dünnerer Innenschichten und dünnerer Squeegeeeinlagen, sodass Rohstoffe eingespart werden können.

Es sind auch ventillose Vulkanisationsformen bekannt, welche eine Vielzahl an Mikrolöchern bzw. Mikrokanälen aufweisen, deren Durchmesser bzw. Breiten jeweils zirka 80 µm betragen ("Ventless-Mold-Technologie"). Derartige Vulkanisationsformen sind vorzugsweise mit einem Hartmetall beschichtet. Der Einsatz ventilloser Vulkanisationsformen ermöglicht einerseits die Fertigung der Reifen ohne oder zumindest im Wesentlichen ohne Beeinträchtigungen der Oberfläche des Gummimateriales, wie beispielsweise unerwünschten Kerben und dergleichen.

Eine Vorrichtung und ein Verfahren der eingangs genannten Art sind beispielsweise aus der JP H07 1471 A bekannt. Die Vorrichtung umfasst eine Elektronenstrahlquelle mit einer Beschleunigungsröhre, einem Scanner und einem Austrittsfenster. Beim Verfahren wird der Rohreifen aufrecht auf einer Halteeinrichtung positioniert, auf welcher der Rohreifen von einer in Drehbewegung versetzbaren Trommel gehalten wird, wobei der Rohreifen auf zwei parallel zueinander ausgerichteten, frei drehbaren Rollen aufsitzt.

Aus der DE 26 22 040 A1 ist eine Vorrichtung zum Bestrahlen von einzelnen Reifenteilen, beispielsweise Wulstschutzstreifen, mit Elektronenstrahlen bekannt. Die Vorrichtung umfasst insbesondere eine Hauptkammer mit einem Eingang und einem Ausgang, wobei der Eingang und der Ausgang jeweils einen labyrinthischen Durchgang zwischen der Kammer und der Umgebung bilden. Es sind eine Förderanlage und eine Aufwickelvorrichtung zum Aufwickeln der bereits bestrahlten Reifenbauteile vorgesehen. Die labyrinthischen Durchgänge sollen ein Austreten geradliniger Strahlung verhindern.

Aus der DE 10 2012 105 730 A1 ist ein Verfahren zur Reduzierung der Klebrigkeit eines an einem Reifenrohling angeordneten Laufstreifens bekannt. Der Reifenrohling wird in einer Haltevorrichtung positioniert und der Laufstreifen anschließend Elektronstrahlen ausgesetzt, wobei der Laufstreifen relativ zur Elektronenstrahlquelle bewegt wird.

Bisher ist es nicht gelungen, den Vulkanisationsvorgang, insbesondere die Ventless-Mold-Technologie, kostengünstig und effizient in den Reifenfertigungsprozess einzubinden. Der Erfindung liegt daher die Aufgabe zugrunde, eine Vorrichtung und ein Verfahren der eingangs genannten Art zur Verfügung zu stellen, welche bzw. welches eine rationelle und kostengünstige, vorzugsweise auf automatisierte Weise ablaufende Integration der Vorvernetzung von Bauteilen eines rohen Fahrzeugluftreifens in den Reifenfertigungsprozess gestattet.

Gelöst wird die gestellte Aufgabe erfindungsgemäß durch eine Vorrichtung umfassend:
- eine Hauptkammer,
- eine Eingangsschleuse und eine Ausgangsschleuse, welche jeweils an die Hauptkammer angrenzen,
- eine an die Hauptkammer angrenzende Strahlenquelle mit einer zur Vorvernetzung geeigneten Elektronenstrahlquelle,
- einer Abschirmeinrichtung zur partiellen Abschirmung der Rohreifen gegenüber den Elektronenstrahlen der Strahlenquelle,
- eine Transporteinrichtung zum Transport der Rohreifen über die Eingangsschleuse in die Hauptkammer,
- eine Transporteinrichtung zum Abtransportieren der Rohreifen aus der Hauptkammer über die Ausgangsschleuse,
- eine in der Hauptkammer positionierte Greifeinrichtung zur gleichzeitigen Handhabung mehrerer Rohreifen zwischen der Strahlenquelle und den beiden Transporteinrichtungen.

Ferner wird die gestellte Aufgabe erfindungsgemäß durch ein Verfahren mit folgenden nacheinander ablaufenden Schritten gelöst:
a) Transport einzelner Rohreifen über eine Eingangsschleuse in eine Hauptkammer,
b) nacheinander Positionieren der Rohreifen vor einer Strahlenquelle sowie reifendimensionsabhängige partielle Abschirmung des betreffenden Rohreifens,
c) Vorvemetzen des Rohreifens durch Bestrahlen mit Elektronenstrahlen,
d) Abtransport des vorvernetzten Rohreifens aus der Hauptkammer über eine Ausgangsschleuse,
   - wobei die Rohreifen in der Hauptkammer von einer drehbaren Greifeinrichtung erfasst, gehalten, transportiert und freigegeben werden.

Mittels des erfindungsgemäßen Verfahrens und der erfindungsgemäßen Vorrichtung können gezielt einzelne Reifenbauteile bzw. Reifenbereiche mit Elektronenstrahlen vorvernetzt werden. Ferner wird eine besonders rationelle Integration der Vorvernetzung in den Prozess der Reifenherstellung ermöglicht, wobei insbesondere eine Vulkanisation in ventillosen Vulkanisationsformen (ventless moulds) ermöglicht wird.

Bei einer bevorzugten Ausführungsvariante ist die in der Hauptkammer positionierte Greifeinrichtung drehbar angeordnet. Vorzugsweise weist die Greifeinrichtung drei, individuell anheb- und absenkbare sowie jeweils teleskopartig ein- und ausfahrbare Greifarme mit je einer spreiz- und drehbaren Handhabungseinheit zum Erfassen und Fixieren von Rohreifen unterschiedlicher Dimensionen auf. Eine derartige Greifeinrichtung ermöglicht auf besonders rationelle Weise den gleichzeitigen Transport mehrerer Rohreifen, wobei die teleskopartig ein- und ausfahrbaren Greifarme eine besonders exakte Positionierung der Rohreifen gegenüber der Strahlenquelle ermöglichen, wodurch eine optimale Vorvernetzung der Rohreifen ermöglicht wird. Die Greifeinrichtung sorgt daher für ein Erfassen, Halten, Transportieren und Freigeben der Rohreifen in der Hauptkammer und gewährleistet einen besonders zügigen Ablauf des Verfahrens.

Um bestimmte Reifenbauteile gezielt vorzuvernetzen, ist es von Vorteil, wenn vor der Strahlenkammer in der Hauptkammer eine Abschirmeinrichtung zur Abschirmung einzelner Reifenbauteile oder definierter Reifenbereiche angeordnet ist.

Bei einer bevorzugten Ausführungsvariante wird der Rohreifen während der Bestrahlung gedreht, sodass der Vorvemetzungsvorgang besonders rationell ablaufen kann.

Besonders vorteilhaft ist eine Ausführung der Erfindung, bei der vor dem Vorvernetzen mittels eines Scanners am Rohreifen angebrachte reifendimensionsabhängige Informationen eingelesen werden und diese an eine vor der Strahlenquelle angeordnete Abschirmeinrichtung übermittelt werden.

Bei einer bevorzugten Ausführungsvariante sind die Eingangsschleuse und die Ausgangsschleuse während des Vorvernetzens gegenüber der Hauptkammer geschlossen. Es ist daher sichergestellt, dass keine Strahlung aus der Hauptkammer austreten kann.

Weitere Merkmale, Vorteile und Einzelheiten der Erfindung werden nun anhand der Zeichnung näher erläutert. Dabei zeigen

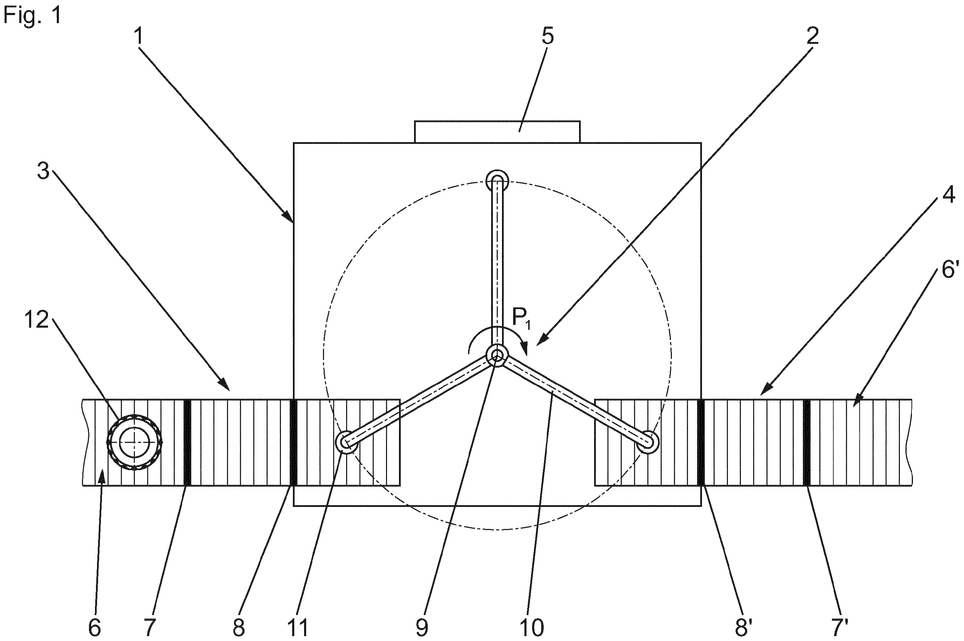

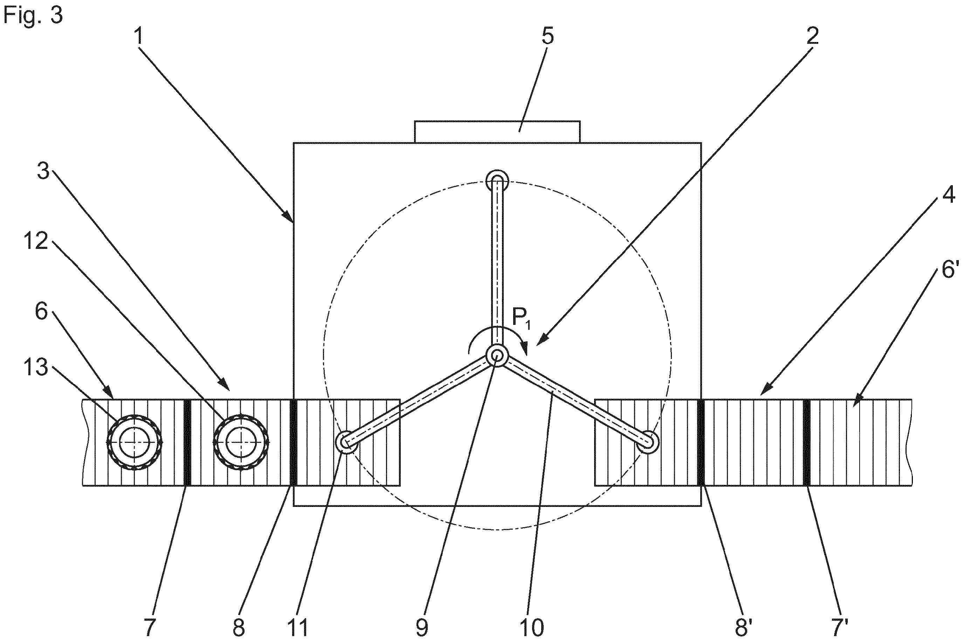

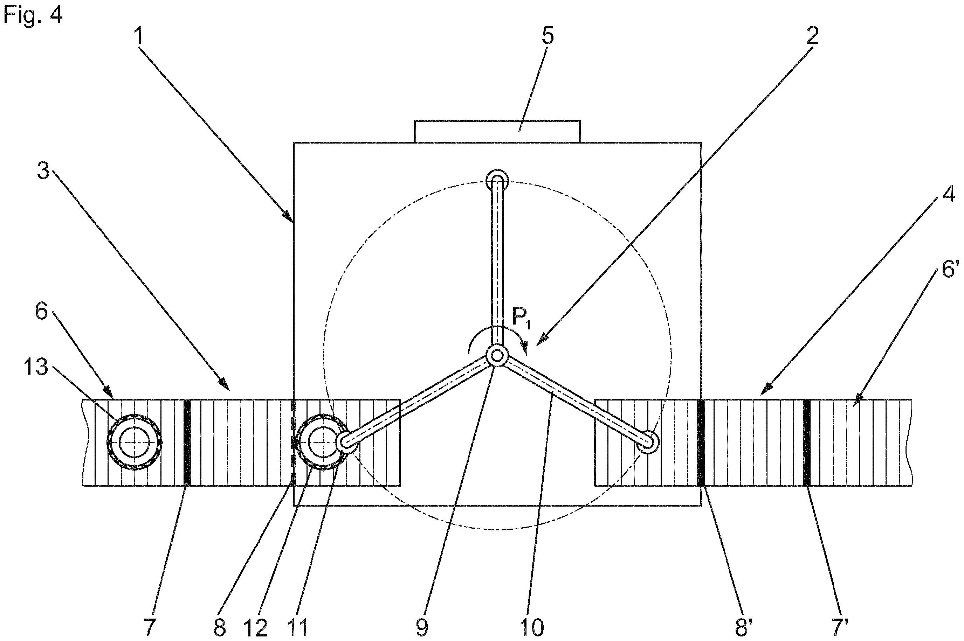

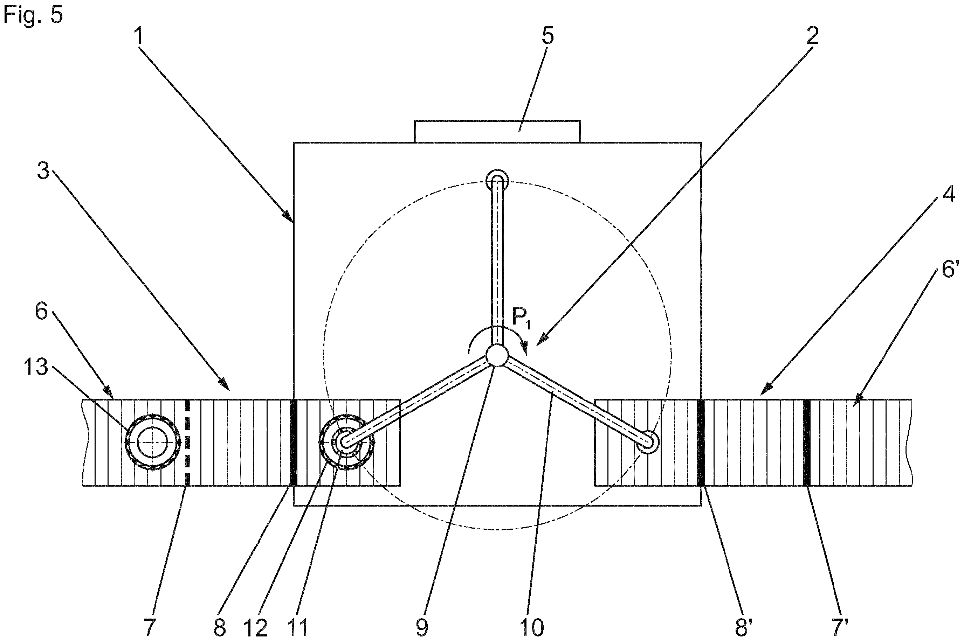

Fig. 1 bis Fig. 9 schematische Darstellungen einer Vorrichtung in Draufsicht sowie in zeitlich aufeinanderfolgenden Verfahrensstadien.

Wie Fig. 1 bis Fig. 9 zeigen, weist die erfindungsgemäße Vorrichtung eine Hauptkammer 1, eine in der Hauptkammer 1 angeordnete Greifeinrichtung 2, eine Eingangsschleuse 3, eine Ausgangsschleuse 4, eine Strahlenquelle 5 sowie zwei Transporteinrichtungen 6, 6' auf.

Die Eingangsschleuse 3, die Ausgangsschleuse 4 sowie die Strahlenquelle 5 grenzen an drei unterschiedliche Seiten der Hauptkammer 1 an, wobei die Eingangsschleuse 3 der Ausgangsschleuse 4 gegenüberliegt. Die Eingangsschleuse 3 und die Ausgangsschleuse 4 weisen jeweils ein äußeres Schleusentor 7, 7' und zur Hauptkammer 1 ein inneres Schleusentor 8, 8' auf, wobei die Schleusentore 7, 7', 8, 8'jeweils in vertikaler oder in horizontaler Richtung verschiebbar sind.

Die Transporteinrichtungen 6, 6' weisen vorzugsweise jeweils ein insbesondere in an sich bekannter Weise ausgeführtes Transportband auf. Die Transporteinrichtung 6 erstreckt sich vom Bereich vor dem äußeren Schleusentor 7 bis in die Hauptkammer 1, sodass mittels der Transporteinrichtung 6 Rohreifen über die Eingangsschleuse 3 in die Hauptkammer 1 transportierbar sind. Die Transporteinrichtung 6' erstreckt sich aus dem Inneren der Hauptkammer 1 bis in den Bereich außerhalb des äußeren Schleusentores 7', sodass über die Transporteinrichtung 6" Rohreifen über die Ausgangsschleuse 4 aus der Hauptkammer 1 abransportierbar sind.

Die beispielsweise an der Decke der Hauptkammer 1 positionierte Greifeinrichtung 2 weist einen Antrieb 9 auf, an welchem drei zueinander dreisternförmig orientierte und daher jeweils um 120° zueinander versetzte Greifarme 10 angeordnet sind. Am äußeren Ende jedes Greifarmes 10 ist eine spreiz- und drehbare Handhabungseinheit 11 angeordnet, mittels welcher Reifen unterschiedlicher Dimensionen von innen erfass- und fixierbar sind. Die Greifarme 10 sind mittels des Antriebs 9 in vertikaler Richtung individuell anheb- und absenkbar sowie um eine in vertikaler Richtung durch die Mitte des Antriebes 9 verlaufende Drehachse schrittweise um 120° drehbar. Ferner ist jeder Greifarm 10 mittels des Antriebs 9 teleskopartig relativ zur Drehachse ein- und ausfahrbar. Wie in Fig. 1 durch den Pfeil P1 angedeutet ist, erfolgt die Drehbewegung bei der gezeigten Ausführungsform in Draufsicht im Uhrzeigersinn. Ferner können die Handhabungseinheiten 11 mittels des Antriebes 9 unabhängig voneinander gespreizt und gedreht werden. Die Greifeinrichtung 2 gestattet daher ein Positionieren der Handhabungseinheiten 11 oberhalb der Transporteinrichtungen 6, 6' sowie ein Positionieren der Handhabungseinheiten 11 vor der Strahlenquelle 5.

Mittels der Strahlenquelle 5 können die aus Kautschukmischungen gefertigten Reifenbauteile eines vor der Strahlenquelle 5 positionierten Rohreifens vorvernetzt werden. Vor der Strahlenquelle 5 ist in der Hauptkammer 1 eine Abschirmeinrichtung (in den Figuren nicht gezeigt) angeordnet, mittels welcher einzelne Bauteile bzw. definierte Bereiche des Rohreifens, beispielsweise etwaige vorgesehene Winggummis, die Seitenwände, ein Seitenwandbereich oder ein Spleißbereich während der Elektronenstrahlbehandlung gezielt abschirmbar sind.

In der Hauptkammer 1 ist vorzugsweise ein in den Figuren nicht gezeigter Scanner angeordnet, welcher an den Reifen vorgesehene, über die jeweilige Reifendimension Auskunft gebende Barcodes einliest. Das Einlesen der Barcodes erfolgt jeweils vor der Bestrahlung der Rohreifen mittels der Strahlenquelle 5. Die eingelesenen Informationen werden vom Scanner an die Abschirmeinrichtung übermittelt, sodass der Rohreifen entsprechend seiner jeweiligen Dimension automatisch abgeschirmt wird.

Nachfolgend wird das erfindungsgemäße Verfahren anhand der in Fig. 1 bis Fig. 9 gezeigten aufeinanderfolgenden Verfahrensschritte erläutert.

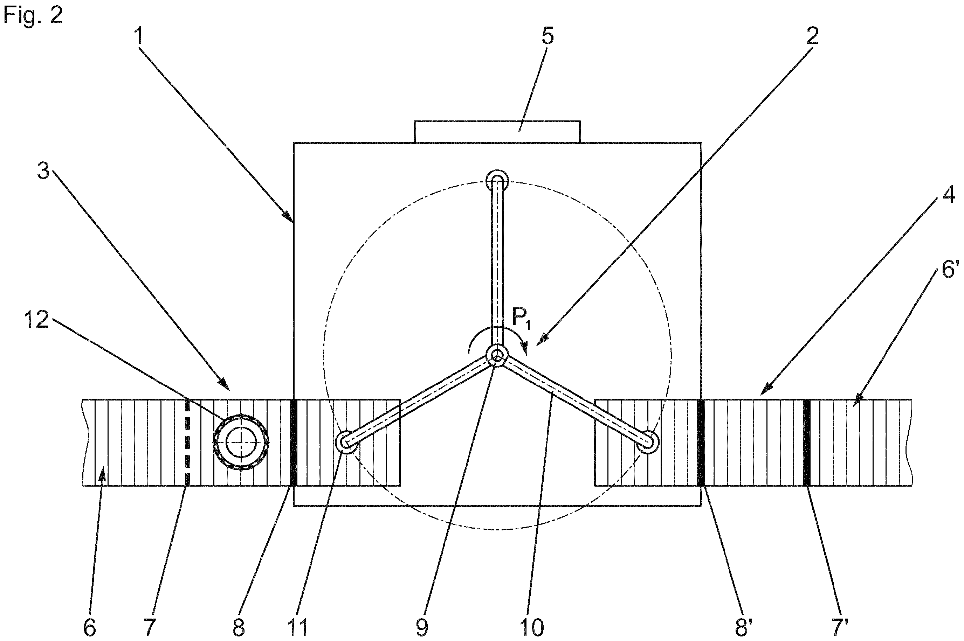

Zu Beginn sind sowohl die Eingangsschleuse 3 als auch die Ausgangsschleuse 4 beidseitig verschlossen. Der erste Rohreifen 12 wird auf der Transporteinrichtung 6 flach liegend antransportiert (Fig. 1). Nachfolgend wird das äußere Schleusentor 7 der Eingangsschleuse 3 geöffnet und der erste Rohreifen 12 in die Eingangsschleuse 3 transportiert (Fig. 2).

Während ein zweiter Rohreifen 13 auf der Transporteinrichtung 6 antransportiert wird, wird die Eingangsschleuse 3 durch Schließen des äußeren Schleusentores 7 wieder geschlossen (Fig. 3). Nachfolgend wird das innere Schleusentor 8 geöffnet und der in der Eingangsschleuse 3 befindliche erste Rohreifen 12 in die Hauptkammer 1 transportiert (Fig. 4). Nach Schließen des inneren Schleusentores 8 wird der oberhalb des ersten Rohreifens 12 positionierte Greifarm 10 abgesenkt, um mit der Handhabungseinheit 11 den ersten Rohreifen 12 zu erfassen. Unterdessen wird das äußere Schleusentor 7 wieder geöffnet (Fig. 5).

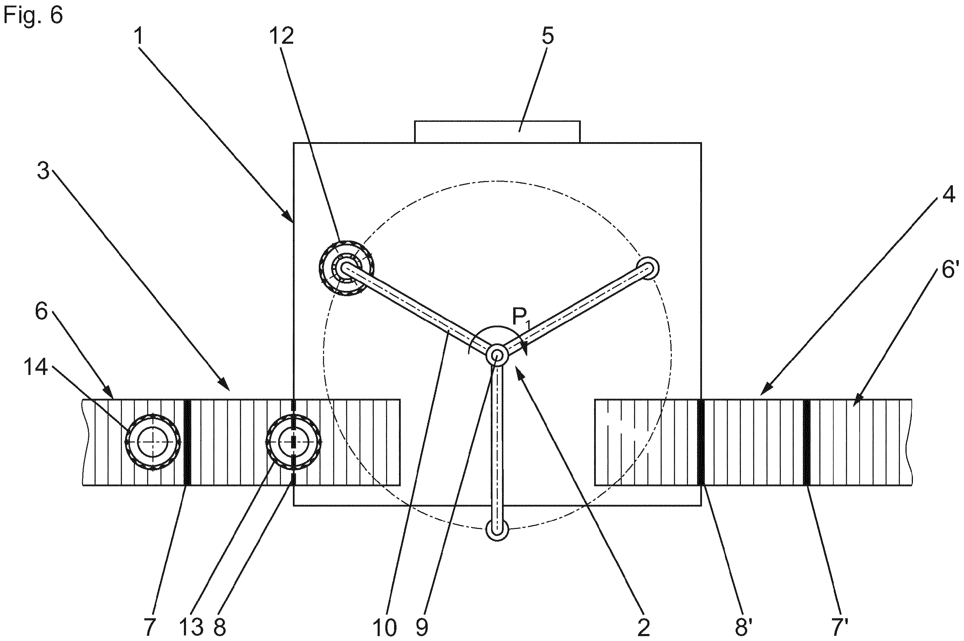

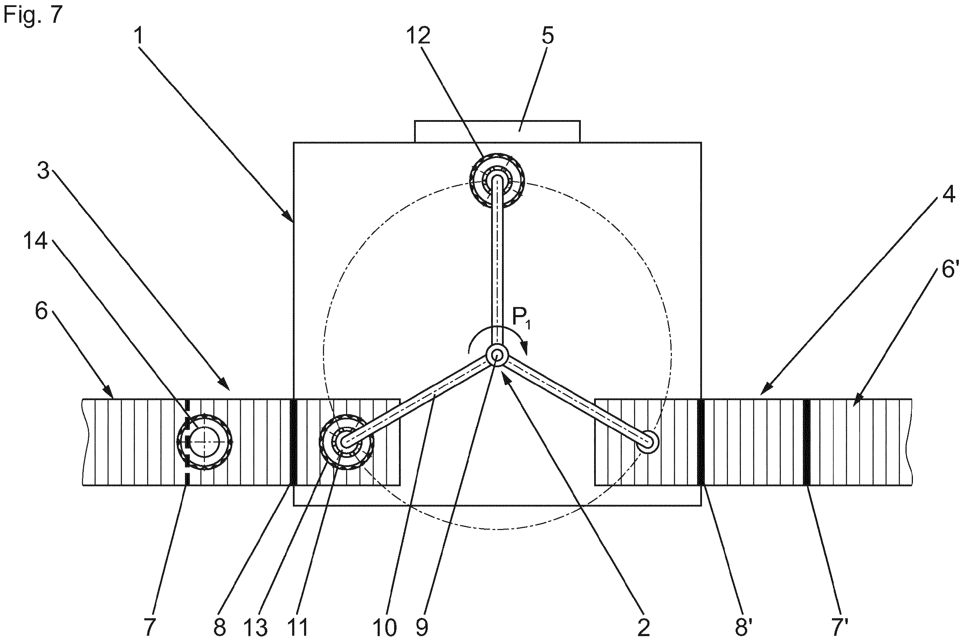

Wie in Fig. 6 angedeutet, wird der Greifarm 10 mit dem ersten Rohreifen 12 angehoben und es wird die Greifeinrichtung 2 entsprechend dem Pfeil P1 in Drehbewegung versetzt, wobei gleichzeitig der zweite Rohreifen 13 über die Eingangsschleuse 3 in die Kammer 1 transportiert wird, das äußere Schleusentor 7 wieder geschlossen wird sowie ein dritter Rohreifen 14 antransportiert wird. Anschließend wird, wie in Fig. 7 gezeigt, das innere Schleusentor 8 wieder geschlossen und nach Abschluss der 120°-Drehbewegung der Greifeinrichtung 2 der den Rohreifen 12 haltende Greifarm 10 abgesenkt, um den Rohreifen 12 vor der Stahlenquelle 5 zu positionieren. Gleichzeitig erfasst ein weiterer Greifarm 10 der Greifeinrichtung 2 den zweiten Rohreifen 13, wobei das innere Schleusentor 8 wieder geschlossen und das äußere Schleusentor 7 wieder geöffnet werden, während der dritte Rohreifen 14 weiter transportiert wird. Der am Rohreifen 12 befindliche Barcode wird nun mittels des Scanners eingelesen. In Abhängigkeit von den im Barcode enthaltenen Informationen über die Reifendimension wird der den Rohreifen 12 haltende Greifarm 10 derart bewegt, insbesondere teleskopartig ein- bzw. ausgefahren, dass der erste Rohreifen 12 optimal vor der Strahlenquelle 5 positioniert wird. Anschließend wird der Rohreifen 12 entsprechend abgeschirmt und bestrahlt, wobei ein gleichzeitiges Drehen der den Rohreifen 12 haltenden Handhabungseinheit 11 eine gleichmäßige Vorvernetzung ermöglicht.

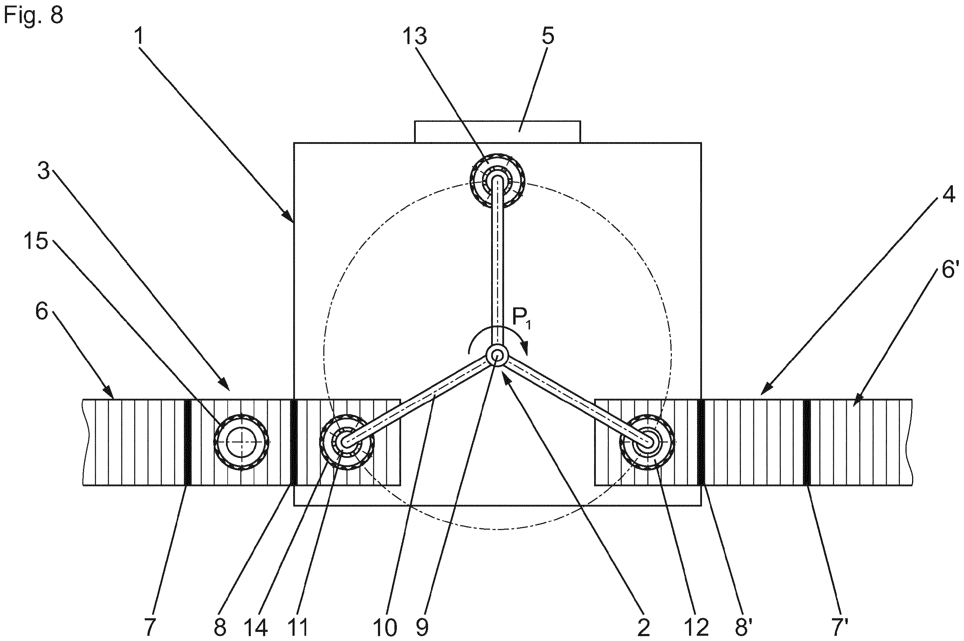

Entsprechend Fig. 8 werden nach erfolgter Bestrahlung des Rohreifens 12 der den Reifen 12 tragende Greifarm 10 und der den Rohreifen 13 tragende Greifarm 10 bzw. die Greifeinrichtung 2 angehoben und die Greifeinrichtung 2 erneut in eine 120°-Drehbewegung versetzt, sodass der vorvernetzte erste Rohreifen 12 vor der Ausgangsschleuse 4 und der zweite Rohreifen 13 vor der Strahlenquelle 5 positioniert werden können, wobei der bereits durch die Eingangsschleuse 3 in die Hauptkammer 1 transportierte dritte Rohreifen 14 vom dritten Greifarm 10 bzw. von dessen Handhabungseinheit 11 erfasst wird. Während der Bestrahlung des zweiten Rohreifens 13 wird die den vorvernetzten ersten Rohreifen 12 haltende Handhabungseinheit 11 gelöst und ein vierter Rohreifen 15 in die Eingangsschleuse 3 transportiert.

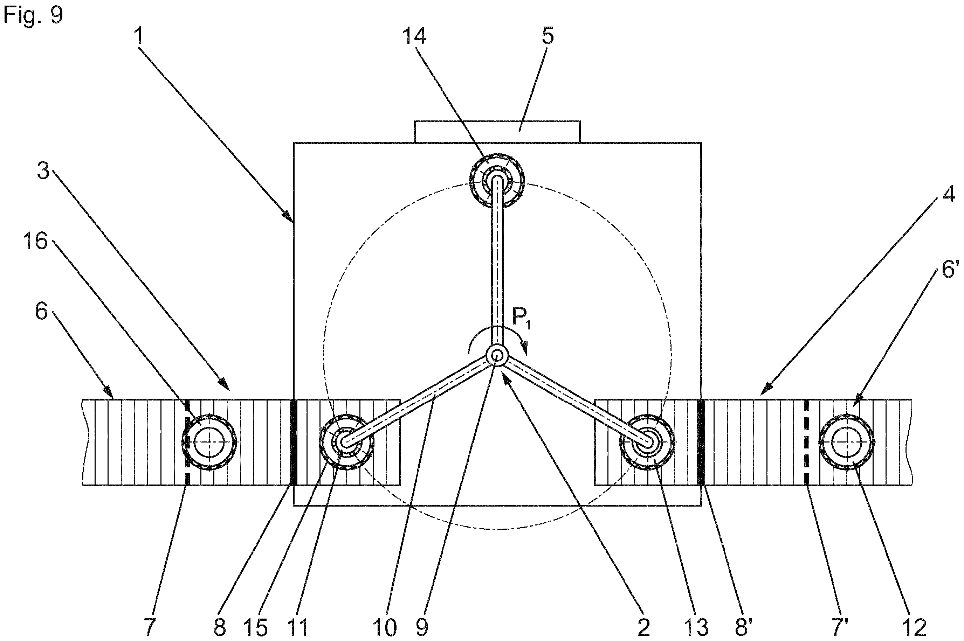

Wie in Fig. 9 angedeutet wird nach Abschluss der Bestrahlung des zweiten Rohreifens 13 der vorvernetzte erste Rohreifen 12 aus der Hauptkammer 1 über die Ausgangsschleuse 4 durch entsprechendes Öffnen und Schließen des inneren Schleusentores 8' und des äußeren Schleusentores 7' abtransportiert. Währenddessen werden der vorvernetzte zweite Rohreifen 13 vor der Ausgangsschleuse 4 abgesetzt, der dritte Rohreifen 14 optimal vor der Strahlenquelle 5 positioniert sowie der vierte Rohreifen 15 erfasst. Dazu werden die Greifarme 10 der Greifeinrichtung 2 entsprechend betätigt. Das Verfahren wird auf analoge Weise fortgesetzt, wobei in Fig. 9 bereits ein fünfter Rohreifen 16 in die Eingangsschleuse 3 transportiert wird.

Die erfindungsgemäße Vorrichtung und das zugehörige erfindungsgemäße Verfahren können auch zum Vorvernetzen anderer Gummiartikel eingesetzt werden, wobei die Gummiartikel vorzugsweise jeweils mit einem Auskunft über ihre Geometrie/ihren Aufbau gebenden Barcode versehen sind. Nach Einlesen des Barcodes über den Scanner, werden die entsprechenden Informationen an die Elektronenstrahlquelle und die Abschirmeinrichtung übermittelt, sodass die Gummiartikel vor ihrer Bestrahlung wie gewünscht abgeschirmt werden. Die Greifarme 10 der Greifeinrichtung 2 sind gegebenenfalls an die entsprechenden Gummiartikel anzupassen.

Mittels der beschriebenen Vorrichtung und dem beschriebenen Verfahren ist es möglich, die Bestrahlung zur Vorvernetzung in den weiteren Reifenfertigungsprozess auf besonders einfache und rationelle Weise zu integrieren. Darüber hinaus ist rechnergesteuert ein vollautomatischer Ablauf des Verfahrens möglich. Die dazu erforderliche Hard- und Software sind nicht Gegenstand der Erfindung.

### Bezugsziffernliste

- 1: Hauptkammer
- 2: Greifeinrichtung
- 3: Eingangsschleuse
- 4: Ausgangsschleuse
- 5: Strahlenquelle
- 6, 6': Transporteinrichtung
- 7, 7': äußeres Schleusentor
- 8, 8': inneres Schleusentor
- 9: Antrieb
- 10: Greifarm
- 11: Handhabungseinheit
- 12, 13, 14, 15: Rohreifen

## Patentansprüche

1. Vorrichtung zur Bereitstellung von Rohreifen (12, 13, 14, 15) mit zumindest einem durch Elektronenstrahlen vorvernetzten, zumindest eine Kautschukmischung aufweisenden Bauteil umfassend:
- eine Hauptkammer (1),
- eine Eingangsschleuse (3) und eine Ausgangsschleuse (4), welche jeweils an die Hauptkammer (1) angrenzen,
- eine an die Hauptkammer (1) angrenzende Strahlenquelle (5) mit einer zur Vorvernetzung geeigneten Elektronenstrahlquelle,
- einer Abschirmeinrichtung zur partiellen Abschirmung der Rohreifen (12, 13, 14, 15) gegenüber den Elektronenstrahlen der Strahlenquelle (5),
- eine Transporteinrichtung (6) zum Transport der Rohreifen (12, 13, 14, 15) über die Eingangsschleuse (3) in die Hauptkammer (1),
- eine Transporteinrichtung (6') zum Abtransportieren der Rohreifen (12, 13, 14, 15) aus der Hauptkammer (1) über die Ausgangsschleuse (4),
- eine in der Hauptkammer (1) positionierte Greifeinrichtung (2) zur gleichzeitigen Handhabung mehrerer Rohreifen (12, 13, 14, 15) zwischen der Strahlenquelle (5) und den beiden Transporteinrichtungen (6, 6').

2. Vorrichtung nach Anspruch 1, **dadurch gekennzeichnet, dass** die in der Hauptkammer (1) positionierte Greifeinrichtung (2) drehbar angeordnet ist.

3. Vorrichtung nach Anspruch 1 oder 2, **dadurch gekennzeichnet, dass** die Greifeinrichtung (2) mehrere, insbesondere drei, individuell anheb- und absenkbare sowie jeweils teleskopartig ein- und ausfahrbare Greifarme (10) mit je einer spreiz- und drehbaren Handhabungseinheit (11) zum Erfassen und Fixieren von Rohreifen (12, 13, 14, 15) unterschiedlicher Dimensionen aufweist.

4. Vorrichtung nach einem der Ansprüche 1 bis 3, **dadurch gekennzeichnet, dass** vor der Strahlenquelle (5) in der Hauptkammer (1) eine Abschirmeinrichtung zur Abschirmung einzelner Reifenbauteile oder definierter Reifenbereiche angeordnet ist.

5. Verfahren zur Bereitstellung von Rohreifen (12, 13, 14, 15) mit zumindest einem durch Elektronenstrahlen vorvernetzten, zumindest eine Kautschukmischung aufweisenden Bauteil, wobei das Verfahren folgenden nacheinander ablaufende Schritte aufweist:
a) Transport einzelner Rohreifen (12, 13, 14, 15) über eine Eingangsschleuse (3) in eine Hauptkammer (1),
b) nacheinander Positionieren der Rohreifen (12, 13, 14, 15) vor einer Strahlenquelle (5) sowie reifendimensionsabhängige partielle Abschirmung des betreffenden Rohreifens (12, 13, 14, 15),
c) Vorvernetzen des Rohreifens (12, 13, 14, 15) durch Bestrahlen mit Elektronenstrahlen,
d) Abtransport des vorvernetzten Rohreifens (12, 13, 14, 15) aus der Hauptkammer (1) über eine Ausgangsschleuse (4),
- wobei die Rohreifen (12, 13, 14, 15) in der Hauptkammer (1) von einer drehbaren Greifeinrichtung (2) erfasst, gehalten, transportiert und freigegeben werden.

6. Verfahren nach Anspruch 5, **dadurch gekennzeichnet, dass** der Rohreifen (12, 13, 14, 15) während der Bestrahlung gedreht wird.

7. Verfahren nach Anspruch 5 oder 6, **dadurch gekennzeichnet, dass** vor dem Vorvernetzen des Rohreifens (12, 13, 14, 15) mittels eines Scanners am Rohreifen (12, 13, 14, 15) angebrachte reifendimensionsabhängige Informationen eingelesen werden und diese an eine vor der Strahlenquelle (5) angeordnete Abschirmeinrichtung übermittelt werden.

8. Verfahren nach einem der Ansprüche 5 bis 7, **dadurch gekennzeichnet, dass** die Eingangsschleuse (3) und die Ausgangsschleuse (4) während des Vorvernetzens gegenüber der Hauptkammer (1) geschlossen sind.

## Claims

1. Device for providing green tyres (12, 13, 14, 15), having at least one component which is pre-crosslinked by electron beam radiation and which has at least one rubber mixture, comprising:
- a main chamber (1),
- an entrance lock (3) and an exit lock (4) which each adjoin the main chamber (1),
- a radiation source (5) which adjoins the main chamber (1) and which has an electron beam source suitable for the pre-crosslinking operation,
- a shielding device for partially shielding the green tyres (12, 13, 14, 15) with respect to the electron beams of the radiation source (5),
- a transport device (6) for transporting the green tyres (12, 13, 14, 15) via the entrance lock (3) into the main chamber (1),
- a transport device (6') for transporting the green tyres (12, 13, 14, 15) out of the main chamber (1) via the exit lock (4),
- a gripping device (2) which is positioned in the main chamber (1) and which serves for simultaneously handling multiple green tyres (12, 13, 14, 15) between the radiation source (5) and the two transport devices (6, 6').

2. Device according to Claim 1, **characterized in that** the gripping device (2) positioned in the main chamber (1) is arranged so as to be rotatable.

3. Device according to Claim 1 or 2, **characterized in that** the gripping device (2) has multiple, in particular three, individually raisable and lowerable and in each case telescopically retractable and extendable gripping arms (10) with in each case one spreadable and rotatable handling unit (11) for taking hold of and fixing green tyres (12, 13, 14, 15) of different dimensions.

4. Device according to any of Claims 1 to 3, **characterized in that** a shielding device for shielding individual tyre components or defined tyre regions is arranged in front of the radiation source (5) in the main chamber (1).

5. Method for providing green tyres (12, 13, 14, 15) having at least one component which is pre-crosslinked by electron beam radiation and which has at least one rubber mixture, wherein the method has the following steps which take place in succession:
a) transporting individual green tyres (12, 13, 14, 15) via an entrance lock (3) into a main chamber (1),
b) successively positioning the green tyres (12, 13, 14, 15) in front of a radiation source (5) and partially shielding the respective green tyre (12, 13, 14, 15) in a manner dependent on tyre dimensions,
c) pre-crosslinking the green tyre (12, 13, 14, 15) by irradiation with electron beams,
d) transporting the pre-crosslinked green tyre (12, 13, 14, 15) out of the main chamber (1) via an exit lock (4),
- wherein, in the main chamber (1), the green tyres (12, 13, 14, 15) are taken hold of, held, transported and released by a rotatable gripping device (2).

6. Method according to Claim 5, **characterized in that** the green tyre (12, 13, 14, 15) is rotated during the irradiation.

7. Method according to Claim 5 or 6, **characterized in that**, prior to the pre-crosslinking of the green tyre (12, 13, 14, 15), tyre-dimension-dependent information items applied to the green tyre (12, 13, 14, 15) are read in by means of a scanner and these are transmitted to a shielding device arranged in front of the radiation source (5).

8. Method according to any of Claims 5 to 7, **characterized in that** the entrance lock (3) and the exit lock (4) are closed with respect to the main chamber (1) during the pre-crosslinking operation.

## Revendications

1. Dispositif de production de pneumatiques bruts (12, 13, 14, 15) comprenant au moins un composant pré-réticulé par des faisceaux d'électrons et comportant au moins un mélange de caoutchoucs, ledit dispositif comprenant :
- une chambre principale (1),
- un sas d'entrée (3) et un sas de sortie (4) qui sont chacun adjacents à la chambre principale (1),
- une source de faisceau (5) adjacente à la chambre principale (1) et pourvue d'une source de faisceau d'électrons adaptée à la pré-réticulation,
- un moyen de blindage destiné à blinder partiellement les pneumatiques bruts (12, 13, 14, 15) vis-à-vis des faisceaux d'électrons provenant de la source de faisceaux (5),
- un moyen de transport (6) destiné à transporter les pneumatiques bruts (12, 13, 14, 15) jusque dans la chambre principale (1) par le biais du sas d'entrée (3) ,
- un moyen de transport (6') destiné à transporter les pneumatiques bruts (12, 13, 14, 15) hors de la chambre principale (1) par le biais du sas de sortie (4),
- un dispositif de préhension (2) positionné dans la chambre principale (1) et destiné à manipuler simultanément plusieurs pneumatiques bruts (12, 13, 14, 15) entre la source de faisceaux (5) et les deux moyens de transport (6, 6').

2. Dispositif selon la revendication 1, **caractérisé en ce que** le moyen de préhension (2) positionné dans la chambre principale (1) est disposé de manière à pouvoir tourner.

3. Dispositif selon la revendication 1 ou 2, **caractérisé en ce que** le moyen de préhension (2) comporte plusieurs, notamment trois, bras de préhension (10) qui peuvent être levés et abaissés individuellement, qui peuvent chacun être escamotés et déployés de manière télescopique et qui comportent chacun une unité de manipulation (11) extensible et rotative destinée à saisir et fixer des pneumatiques bruts (12, 13, 14, 15) de dimensions différentes.

4. Dispositif selon l'une des revendications 1 à 3, **caractérisé en ce qu'**un moyen de blindage destiné à blinder des composants de pneumatique individuels ou des zones de pneumatique définies est disposé dans la chambre principale (1) devant la source de rayonnement (5) .

5. Procédé de production de pneumatiques bruts (12, 13, 14, 15) comprenant au moins un composant pré-réticulé par des faisceaux d'électrons et comportant au moins un mélange de caoutchoucs, le procédé comportant les étapes successives suivantes :
a) transporter des pneumatiques bruts individuels (12, 13, 14, 15) jusque dans une chambre principale (1) par le biais d'un sas d'entrée (3),
b) positionner successivement les pneumatiques bruts (12, 13, 14, 15) devant une source de faisceaux (5) ainsi qu'un blindage partiel du pneumatique brut concerné (12, 13, 14, 15), ledit blindage dépendant de la dimension du pneumatique,
c) pré-réticuler le pneumatique brut (12, 13, 14, 15) par irradiation avec des faisceaux d'électrons,
d) retirer le pneumatique brut pré-réticulé (12, 13, 14, 15) de la chambre principale (1) par le biais d'un sas de sortie (4),
- les pneumatiques bruts (12, 13, 14, 15) situés dans la chambre principale (1) étant saisis, maintenus, transportés et libérés par un moyen de préhension rotatif (2).

6. Procédé selon la revendication 5, **caractérisé en ce que** le pneumatique brut (12, 13, 14, 15) est mis en rotation pendant l'irradiation.

7. Procédé selon la revendication 5 ou 6, **caractérisé en ce que**, avant la pré-réticulation du pneumatique brut (12, 13, 14, 15), des informations, relatives à la dimension du pneumatique et situées sur le pneumatique brut (12, 13, 14, 15), sont lues au moyen d'un scanner et sont transmises à un moyen de blindage disposé devant la source de faisceaux (5).

8. Procédé selon l'une des revendications 5 à 7, **caractérisé en ce que** le sas d'entrée (3) et le sas de sortie (4) sont fermés par rapport à la chambre principale (1) pendant la pré-réticulation.
